# EUROPEAN PATENT SPECIFICATION

(11) **EP 1 073 226 B1**
(45) Date of publication and mention of the grant of the patent: **09.05.2007**
(21) Application number: 00402082.2
(22) Date of filing: 21.07.2000
(51) Int. Cl.: H04J 3/06, H04J 3/16

(54) **Method for mapping tributaries in time division frames in telecommunications networks and circuit therefor**
Verfahren zur Abbildung von Übertragungsbändern in Zeitrahmen in Telekommunikationsnetzwerken und entsprechende Schaltung
Procédé de mise en correspondance d'affluents dans des trames temporelles dans des réseaux de télécommunication et circuit correspondant

(30) Priority: 30.07.1999 IT TO990679
(43) Date of publication of application: 31.01.2001
(73) Proprietor: Alcatel Lucent, 75008 Paris (FR)
(72) Inventor: Traverso, Giovanni, 23807 Rovagnate, Lecco (IT); Razzetti, Luca, 20099 Sesto San Giovanni, Milano (IT)
(74) Representative: Menzietti, Domenico

(56) References cited:
- US-A- 5 473 611
- US-A- 5 651 034

## Description

The present invention relates to a method for mapping tributaries in time division frames in telecommunications networks, where an input tributary is stored through a first writing step, then the stored tributary is retrieved by a second reading step and movable bytes are inputted in the retrieved stored tributary, the position of said movable bytes depending on the reading step, and where such movable bytes determine an irregularity in the reading step.

Nowadays, in the aim of transmitting more signals simultaneously, such as more telephone signals on the same transmission direction, telecommunications networks can use two different techniques: a first technique assigning a single transmissive carrier to each signal, such as a pair of physical wires, which is denominated space division technique. A second technique providing execution of a multiplexing operation, i.e. associating several simultaneous signals on only one transmissive carrier. Such an operation can be performed according to two separate multiplexing techniques, i.e. a frequency division technique and a time division technique, so denominated according to the domains where they operate.

From now on reference will be made to the numerical multiplexing systems using time division techniques, in particular with reference to synchronous systems.

Clock signals or chronosignals of tributaries in digital multiplexing synchronous systems operate all at the same instantaneous frequency, in a fixed ratio to the frequency of the clock signal of the digital multiplexing circuit. However, a synchronism condition so obtained is not enough to obtain the condition of symbol synchronism, for which a further compensation is required in view of the unavoidable phase shifts caused by propagation time variations on the transmissive carriers and by the fluctuations introduced by the line regenerators, said phase shifts occurring between the clock signal associated to an input tributary and the local clock signal of the digital multiplexing circuit. In order to compensate said phase shifts, i.e. for realigning the phase of the tributaries binary digits with the clock signal of the multiplexing circuit, a buffer is used at the input for each tributary, said buffer being obtained through an elastic memory. Buffer memories are also used to input additional digits or pointers in the multiplexing digital flow, which are used for frame alignment purposes and service functions.

The recent high widespread of SDH (Synchronous Digital Hierarchy) synchronous networks, has required in particular the highest synchronism requirements for tributaries multiplexing. It is known, in fact, that input tributaries in an SDH network, such as VC (Virtual Container) tributaries coming from another node, should be subject to a mapping operation.

A mapping operation substantially consists of a time division multiplexing operation, wherein a buffer memory is used for retiming the various tributaries and inserting pointers, i.e. indicators, whose value in the frame area of the Tributary Unit defines the frame offset of the relevant Virtual Container, i.e. identifying its position within the frame area of the Tributary Unit.

Two different pointer types can be substantially identified. A first pointer type, associated to the Administrative Unit (AU), which is hierarchically higher, and a second pointer type associated to the Tributary Unit (TU), which is hierarchically lower. A TU pointer has its position defined with respect to the position of an AU pointer, usually at zero position.

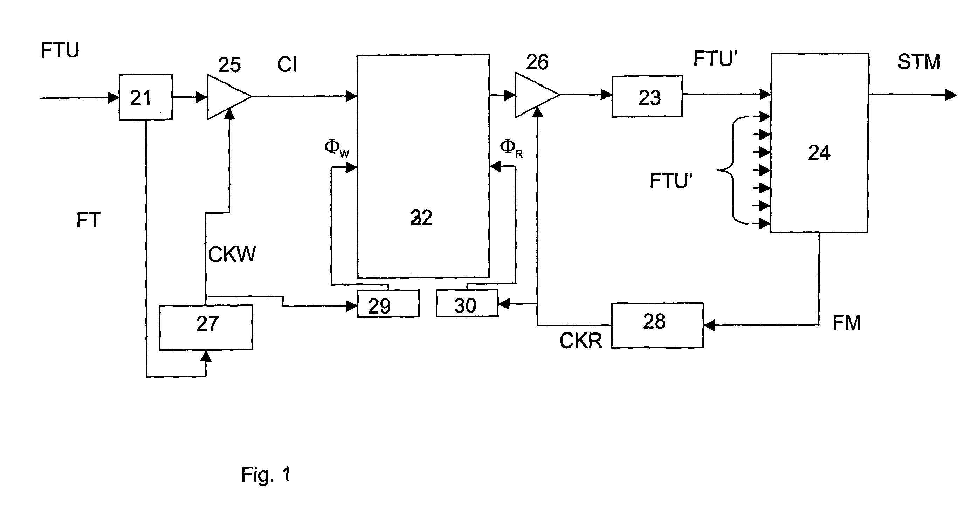

Fig. 1 shows a mapping circuit in known SDH networks, which provides for a tributary frame aligner 21 to each input tributary unit FTU, as well as a buffer memory 22, wherein an information contents Cl extracted from the tributary unit FTU is stored byte-by-byte. A frequency FT of the input tributary FTU is employed to obtain, through a writing time distributor 27, the write clock signal CKW used to scan, through an input buffer 25, the byte writing operation of the tributary FTU in the buffer memory 22. Information Cl contained in each tributary unit FTU is written in the buffer memory 22 at an address represented by a writing step Φ_{W} generated by a writing counter 29, after the tributary frame aligner 21 has identified frame synchronization.
The tributary unit FTU stored in the buffer memory 22 is read again by means of a pointer generator 23. A reading time distributor 28 scans a reading clock signal CKR, acting on a reading buffer 26 and read counter 30, which generates a reading step Φ_{R} containing the read addresses. Downstream the pointer generator 23, a frame STM with fixed pointers is originated after a multiplexing operation executed by a multiplexing circuit 24, where the data read from each buffer memory 22, multiplexed in time by the multiplexing circuit 24, a tributary unit by tributary unit are allocated in the time intervals of such a frame STM. Additionally, a multiplexing frequency FM is obtained from the multiplexing 24 as the bytes of the various flows are gradually multiplexed, which works as a reference for driving the reading time distributor 28. The pointer generator 23, according to the read instant when the first byte of the tributary frame is retrieved from the memory 22, will determine and insert the appropriate TU pointer by generating a tributary unit FTU', which is mapped. While executing such a pointer insert operation, the pointer generator 23 should also consider the occupation state of the buffer memory 22, for which two thresholds are defined, i.e. an upper one and a lower one. If the occupation state exceeds, for instance, the upper threshold, the pointer generator 23 will insert a negative justification byte, i.e. a redundancy byte. Inputting such a redundancy byte determines a displacement of the following frame portion bearing the information contents. In other words, due to such a mechanism, the TU pointer value evolves in time, describing a displacement of tributary information with respect to the structure of the tributary unit FTU carrying it.

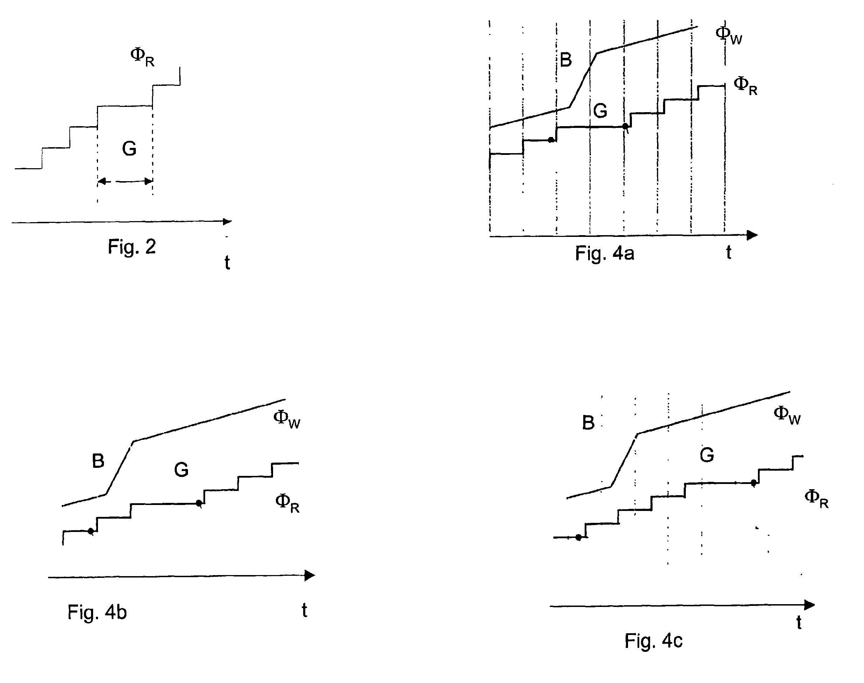

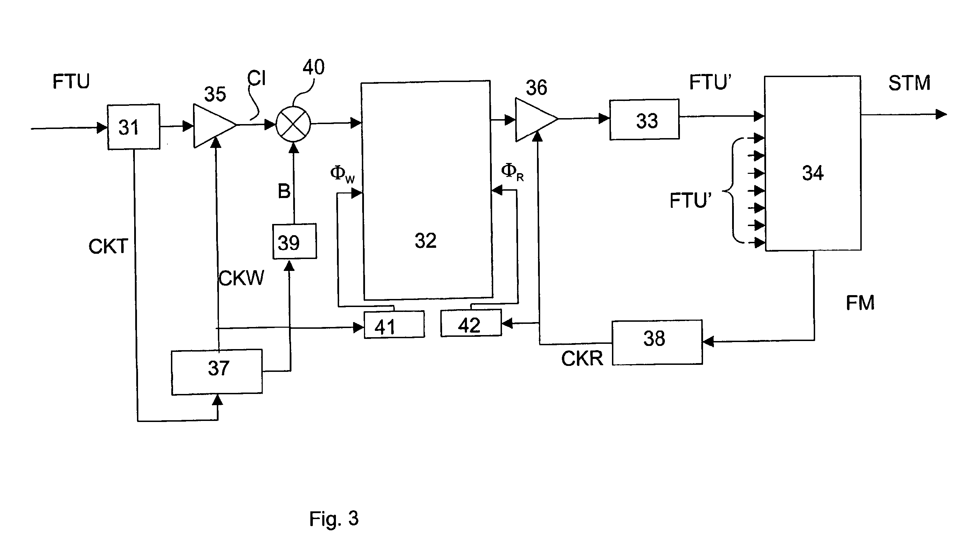

The use of pointers allows to make up for the sliding phenomena caused by propagation delays so as to supply at the output a resynchronized frame STM wherein all tributary units have been correctly adapted inside it, independently from the phase errors affecting them while reaching the local network. The nature itself of SDH frames, however, will cause some irregularities in the writing and reading frequency of the buffer memory. As it is known, in fact, the frame STM being restored should comprise a Section Overhead, (SOH) which, on the contrary, is not written in the buffer memory 22. As it can be seen in Fig. 2, where the reading counter 30 output is shown as a function of the time t on the number of clock pulses of the reading clock signal CKR, i.e. the reading step Φ_{R}, this means that the read clock signal CKR has an irregular trend with short or long intervals during which the reading counter will not advance, i.e. defining a reading gap G, and the buffer memory 22 will fill up. Therefore, the occupation state of the buffer memory 22 may change significantly. The amplitude of the change of the occupation state is commonly called "static range" and is substantially corresponding to the maximum size of the elastic memory contained in the buffer memory 22. The presence of the "static range" for buffer memories is anyway an intrinsic phenomenon of SDH frames structure.

On the contrary, there is an irregularity generated by the mapping operation itself. As described above, in fact, the pointer generator 23 can input redundancy bytes in the frame, depending on the occupation state of the buffer memory 22. The pointer generator 23 will also insert movable stuffing bytes or redundancy bytes, which in the instance of VC-12 are bytes R, N2, J2, in sets of three consecutive bytes. Their insertion point in the frame, or better their insertion time, depends on the reading instant of the first informative byte from the buffer memory 22, the so-called "time slot 0". The reading instant of the first informative byte, given by the read clock signal is affected by uncertainty or offset resulting in an information displacement of the tributary in the frame, since the insertion instant of the movable stuffing bytes will change, time shifting the whole following information. As a result, the frequency of the demultiplexed tributary will instantaneously become irregular due to the time shifts of the informative bytes. Since such a frequency, as said above, is used to obtain the same reading clock signal CKR, the irregularity affects the reading step with a feedback mechanism leading the static range to assume an unpredictable shape.

Such an unpredictable shape of the static range is particularly annoying, considering that in the instance of a memory overflow, the mapping operation will be started again positioning the writing pointers of the buffer memory in the middle of the static range extension, so that an unknown static band shape will hinder a correct positioning and increase the possibility of overflow events.

In order to take this in account and avoid undesirable overflow phenomena, large size buffer memories are required, which increase both the costs and propagation times. An alternative solution would require tabular storage of all start positions with respect to all offsets that may arise between the reading and writing frames due to the effect of the redundancy bytes, with consequent higher manufacturing costs.

US Patent number 5473611 discloses a method to limit the jitter of a first signal which is mapped into a second signal, wherein the jitter is caused by a pointer movement of the second signal. This is achieved by a pointer movement of the first signal in a direction which is opposite to the pointer movement of the second signal.

It is the object of the present invention to solve the above drawbacks and provide a method for mapping tributaries in time division frames in telecommunications networks, having more efficient and improved performances.

In this frame, it is the main object of the present invention to provide a method for mapping tributaries in time division frames in telecommunications networks, which brings the static range back to the proper range of the intrinsic SDH frames structure.

A further object of the present invention is to provide a method for mapping tributaries in time division frames in telecommunications networks using smaller elastic memories having lower passing-through times compared to known systems.

In order to reach such objects, the present invention provides a method for mapping tributaries in time division frames in telecommunications networks, and/or a mapping circuit, incorporating the features of the annexed claims, which form an integral part of the description herein.

Further objects, features and advantages of the present invention will become apparent from the following detailed description and annexed drawings, which are supplied by way of non limiting example, wherein:
- Figure 1 shows a basic schematics of a circuit implementing a method for mapping tributaries in time division frames in telecommunications networks according to the known state of the art;
- Figure 2 shows a time diagram of a quantity connected to the circuit represented in Fig. 1;
- Figure 3 shows a schematics diagram of a circuit implementing the method for mapping tributaries in time division frames in telecommunications networks, according to the present invention; and
- Figures 4a, 4b, 4c show time diagrams related to three different embodiments of the method for mapping tributaries in time division frames in telecommunications networks, according to the present invention.

Fig. 3 shows a schematics diagram of a circuit implementing the method for mapping tributaries in time division frames in telecommunications networks, according to the present invention.

Therefore, it is shown a tributary unit FTU, which may for instance be a Tributary Unit TU-12, reaching the input of a tributary frame aligner 31, which identifies frame synchronization inside the tributary unit FTU and will send an information contents Cl, corresponding to the payload of the VC12, to an input buffer 35. The input buffer 35 is controlled by a writing clock signal CKW, originated by a writing time distributor 37, which is synchronized with a tributary clock signal CKT, originated by the pointer interpreter 31. Additionally, the writing clock signal CKW causes a write counter 41 to advance, which indicates the writing addresses in the elastic memory 32, through the writing step Φ_{W}. A mixer 40 is located downstream the input buffer 35, then the information contents Cl is stored in an elastic memory 32. Located downstream the elastic memory 32 is an output buffer 36, wherefrom the information contents Cl is read through a read clock signal CKR, which also drives a reading counter 42 generating the reading step Φ_{R}, and is sent to a pointer generator 33. The pointer generator 33 introduces the pointers required according to the known state of the art and will originate a tributary unit FTU', which is still a tributary unit TU-12, as at the input. A multiplexing circuit 34 will then multiplex along with other tributary units FTU' similarly obtained so as to generate an STM-1 output frame STM.

Multiplexing frequency FM is picked up from the multiplexing circuit 34 and used to drive a reading time distributor 38 supplying the read clock signal CKR.

The present invention is based on the principle of feeding back also on the writing clock signal CKW and the writing step Φ_{W} associated to the writing counter 41 all irregularities occurring in the instantaneous value of the multiplexing frequency FM, which are caused by the movable redundancy bytes, such as bytes R, N2, J2, caused by the pointer generator 33, and are reflected on the reading clock signal CKR. This is obtained by writing redundancy bytes in the elastic memory 32 to an extent which is equal or proportional to the movable redundancy bytes introduced by the pointer generator 23, so that the writing step Φ_{W} and reading step Φ_{R} will not have very differing values at any time.

More in particular, according to the embodiment shown in Fig. 3, since in this instance the information contents Cl is the contents of a Virtual Container VC12, three redundancy bytes will be inserted between two bytes belonging to the information contents Cl, through a special burst circuit 39 controlled by the writing times distributor 37. Such an operation is performed within the available time interval, while the input buffer 35 accumulates the other 8 bits of the informative byte pertaining to the information contents Cl. During such a time interval, the burst circuit 39 sends a write burst B, i.e. a binary sequence containing all three redundancy bytes, while the writing times distributor 37 will update the writing counter 41, incrementing the writing step Φ_{W} accordingly by three positions, i.e. the writing position value in the elastic memory 32 for the information byte that in the meantime has been composed inside the input buffer 35.

As a result, using the method for mapping tributaries in time division frames in telecommunications networks according to the present invention, there are two irregularities available: a write irregularity related to the writing burst B, and a read irregularity related to the presence of SOH and fixed pointers, which, as said above, is called reading gap G.

The shape of the static range deriving from the use of the circuit of Fig. 3 is now due to the relative position of the writing burst B and the read gap G. Fig. 4a is representing the reading step Φ_{R} and writing step Φ_{W}, as a function of time t, according to a possible strategy, where the burst circuit 39 is driven for emitting the writing burst B at the time when the start of read gap G is estimated on the basis of the knowledge of the tributary FTU. In such a configuration with a substantial overlapping of the reading burst B and reading gap G, a minimum can be computed for the highest difference between the reading step Φ_{W} and writing step Φ_{R}.

Figures 4b and 4c show two different configurations, wherein the reading burst B and reading gap G are partially overlapped and separated, respectively.

According to the above description the features of the present invention will be clear, and also its advantages are clear.

The method for mapping tributaries in time division frames in telecommunications networks according to the present invention will advantageously allow either to eliminate or minimize the effect on the static range of movable redundancies, causing the writing step, that would be not affected by it, to take the irregularity deriving from such irregularities. Thus, it is possible to make not only the average behavior, but also the instantaneous behavior of both the writing and reading steps more similar each other.

It is obvious that many changes are possible for the man skilled in the art to the method for mapping tributaries in time division frames in telecommunications networks described above by way of example, without departing from the novelty spirit of the innovative idea, and it is also clear that in practical actuation of the invention the components may often differ in form and size from the ones described and be replaced with technical equivalent elements.

In particular, redundancy byte compensation strategies may differ, i.e. not only be restricted to burst mode writing operations in the elastic memory.

Moreover, the method for mapping tributaries in time division frames in telecommunications networks according to the present invention can be applied not only to synchronous systems, but also to asynchronous systems, and in general to all telecommunications systems wherein an information flow is mapped inside a buffer memory and irregularities are associated only to the writing step.

Finally, it should be appreciated that the burst signal being written in the buffer memory consists of bytes, whose primary function is to reproduce the irregularity generated by the movable redundancy bytes. Therefore, the contents of such bytes is fully free, so that burst bytes can be used as an auxiliary channel for conveying e.g. service signals through the memory, without providing as usual more memory registers or elements, which are also subject to operations of phase retiming for obviating to phase differences between reading and writing operations.

In the above example a three-bytes burst signal makes a three-bytes channel available, through which alarm signals present in the time domain upstream the memory can be conveyed, for instance towards the time domain downstream using the phase control already provided for the buffer memory.

Finally, the present invention further comprises a computer program comprising computer program code means adapted to perform all the steps of the method when said program is run on a computer and a computer readable medium having a program recorded thereon, said computer readable medium comprising computer program code means adapted to perform all the steps of the method when said program is run on a computer.

## Claims

1. A method for mapping a tributary in a time division frame in a telecommunications network, the method comprising the steps of:
a) storing the tributary (FTU) through a writing step (Φ_{w}, CKW);
b) retrieving the stored tributary (FTU') through a reading step (Φ_{R}, CKR);
c) inputting movable bytes in the retrieved stored tributary (FTU'), the position of the movable bytes (R2, J2, N2) depending on the reading step (Φ_{R}, CKR), **characterized by** further including the step of inputting in the tributary to be stored (FTU) a number of redundancy bytes (B) equal or proportional to the number of the movable bytes.

2. A method according to claim 1, **characterized in that** the step of inputting the redundancy bytes (B) is carried out before the step of storing the tributary.

3. A method according to claim 1 or 2, **characterized in that** the step of inputting the movable bytes is carryed out during a pointer insertion.

4. A method according to any of claims 1 to 3, **characterized in that** the step of inputting the redundancy bytes (B) in the tributary to be stored (FTU) is carried out at a speed which is higher than the speed for storing information bytes (Cl)of the tributary to be stored.

5. A method according to claim 4, **characterized in that** the step of inputting the redundancy bytes (B) is carried out while the information bytes (CI) are stored in a buffer memory (35).

6. A method according to any of claims 1 to 5, **characterized in that** the step of inputting the redundancy bytes (B) is controlled according to the structure of the tributary to be stored (FTU).

7. A method according to any of claims 1 to 6, **characterized in that** the position of redundancy bytes and the position of the movable bytes are substantially overlapped in time.

8. A method according to any of claims 5 to 7, **characterized in that** the redundancy bytes (B) contain an additional channel for conveying information through the buffer memory (22).

9. A method according to any of claims 1 to 8, **characterized in that** the redundancy bytes (B) contain information related to alarm signals.

10. A circuit for mapping a tributary in a time division frame in a telecommunications network, the circuit comprising:
- memory means (32) for storing the tributary (FTU);
- means (35, 37, 41) for controlling writing of the tributary in the memory means (32);
- means (38, 36, 42) for controlling reading from the memory means (32); and
- means (33) for inserting movable bytes in a tributary (FTU') which is read from the memory means (32),
**characterized in that** it further comprises byte writing means (39) adapted to input in the tributary (FTU) to be stored a number of redundancy bytes (B) equal or proportional to the number of the movable bytes.

11. A circuit according to claim 10, **characterized in that** the byte writing means (39) are adapted to write the redundancy bytes (B) at a writing rate which is higher than the writing rate in the memory means (32) of the tributary (FTU).

12. A circuit according to claim 10 or 11, **characterized in that** the means for controlling the writing comprise:
- a writing time distributor (37);
- temporary memory means (35);
- mixing means (40);
and **in that** the writing time distributor (37) controls the byte writing means (39) for writing the redundant bytes (B) in the mixing means (40).

13. A circuit according to claim 12, **characterized in that** the redundant bytes (B) are written in the mixing means (40), whereas information bytes of the tributary to be stored are stored in the temporary memory means (35).

14. A computer program comprising computer program code means adapted to perform all the steps of any of claims 1 to 9 when said program is run on a computer.

15. A computer readable medium having a program recorded thereon, said computer readable medium comprising computer program code means adapted to perform all the steps of any of claims 1 to 9 when said program is run on a computer.

## Patentansprüche

1. Verfahren zum Abbilden einer Tributary in einem Zeitmultiplexrahmen in einem Telekommunikationsnetz, wobei das Verfahren die Schritte umfasst:
a) Speichern der Tributary (FTU) über einen Schreibschritt (ΦW, CKW);
b) Abrufen der gespeicherten Tributary (FTU') über einen Leseschritt (ΦR, CKR);
c) Eingeben beweglicher Bytes in die abgerufene gespeicherte Tributary (FTU'), wobei die Position der beweglichen Bytes (R2, J2, N2 vom Leseschritt abhängt (ΦR, CKR),
**dadurch gekennzeichnet, dass** es ferner den Schritt des Eingebens einer Anzahl von Redundanzbytes (B) gleich oder proportional zur Anzahl der beweglichen Bytes in die zu speichernde Tributary (FTU) umfasst.

2. Verfahren nach Anspruch 1, **dadurch gekennzeichnet, dass** der Schritt des Eingebens von Redundanzbytes (B) vor dem Schritt des Speicherns der Tributary ausgeführt wird.

3. Verfahren nach Anspruch 1 oder 2, **dadurch gekennzeichnet, dass** der Schritt des Eingebens der beweglichen Bytes während einer Pointer-Einfügung ausgeführt wird.

4. Verfahren nach einem der Ansprüche 1 bis 3, **dadurch gekennzeichnet, dass** im Schritt des Eingebens der Redundanzbytes (B) in die zu speichernde Tributary (FTU) mit einer Geschwindigkeit ausgeführt wird, die höher als die Geschwindigkeit zum Speichern von Informationsbytes (CI) der zu speichernden Tributary ist.

5. Verfahren nach Anspruch 4, **dadurch gekennzeichnet, dass** der Schritt des Eingebens von Redundanzbytes (B) ausgeführt wird, während die Informationsbytes (CI) in einem Pufferspeicher (35) gespeichert werden.

6. Verfahren nach einem der Ansprüche 1 bis 5, **dadurch gekennzeichnet, dass** der Schritt des Eingebens der Redundanzbytes (B) entsprechend der Struktur der zu speichernden Tributary (FTU) gesteuert wird.

7. Verfahren nach einem der Ansprüche 1 bis 6, **dadurch gekennzeichnet, dass** die Position von Redundanzbytes und die Position der beweglichen Bytes in der Zeit im Wesentlichen überlappen.

8. Verfahren nach einem der Ansprüche 5 bis 7, **dadurch gekennzeichnet, dass** die Redundanzbytes (B) einen zusätzlichen Kanal zum Befördern von Information durch den Pufferspeicher (22) enthalten.

9. Verfahren nach einem der Ansprüche 1 bis 8, **dadurch gekennzeichnet, dass** die Redundanzbytes (B) Information enthalten, die mit Alarmsignalen zusammenhängen.

10. Schaltung zum Abbilden einer Tributary in einem Zeitmultiplexrahmen in einem Telekommunikationsnetz, wobei die Schaltung umfasst:
- eine Speichereinrichtung (32) zum Speichern der Tributary (FTU);
- Mittel (35, 37, 41) zum Steuern des Schreibens der Tributary in die Speichereinrichtung (32);
- Mittel (38, 36, 42) zum Steuern des Lesens aus der Speichereinrichtung (32); und
- eine Einrichtung (33) zum Einfügen beweglicher Bytes in eine Tributary (FTU'), die aus der Speichereinrichtung (32) gelesen wird,
**dadurch gekennzeichnet, dass** es ferner eine Byte-Schreibeinrichtung (39) umfasst, die dafür ausgelegt ist, eine Anzahl von Redundanzbytes (B) gleich oder proportional zur Anzahl der beweglichen Bytes in die zu speichernde Tributary (FTU) einzugeben.

11. Schaltung nach Anspruch 10, **dadurch gekennzeichnet, dass** die Byte-Schreibeinrichtung (39) dafür ausgelegt ist, die Redundanzbytes (B) mit einer Schreibgeschwindigkeit zu schreiben, die höher als die Schreibgeschwindigkeit in der Speichereinrichtung (32) für die Tributary (FTU) ist.

12. Schaltung nach Anspruch 10 oder 11, **dadurch gekennzeichnet, dass** die Mittel zum Steuern des Schreibens umfassen:
- einen Schreibzeit-Verteiler (37);
- eine temporäre Speichereinrichtung (35);
- eine Mischeinrichtung (40);
und dass dez Sehreibzeit-Verteiler (37) die Byte-Schreibeinrichtung (39) zum Schreiben der Redundanzbytes (B) in der Mischeinrichtung (40) steuert.

13. Schaltung nach Anspruch 12, **dadurch gekennzeichnet, dass** die Redundanzbytes (B) der Mischeinrichtung (40) geschrieben werden, während Informationsbytes der zu speichernden Tributary in der temporären Speichereinrichtung (35) gespeichert werden.

14. Computerprogramm, das Computerprogrammcodemittel umfasst, die dafür ausgelegt sind, alle Schritte der Ansprüche 1 bis 9 auszuführen, wenn das Programm auf einem Computer laufen gelassen wird.

15. Computerlesbares Medium mit einem darauf gespeicherten Programm, wobei das computerlesbare Medium Computerprogrammcodemittel umfasst, die dafür ausgelegt sind, alle Schritte von jedem der Ansprüche 1 bis 9 auszuführen, wenn das Programm auf einem Computer laufen gelassen wird.

## Revendications

1. Procédé de mappage d'un tributaire dans une trame répartie dans le temps dans un réseau de télécommunications, le procédé comprenant les étapes consistant à :
a) stocker le tributaire (FTU) par le biais d'une étape d'écriture (Φ_{W}, CKW) ;
b) rechercher le tributaire stocké (FTU') par le biais d'une étape de lecture (Φ_{R}, CKR) ;
c) transmettre des octets mobiles dans le tributaire stocké recherché (FTU'), et la position des octets mobiles (R2, J2, N2) selon l'étape de lecture (Φ_{R}, CKR), **caractérisé en ce qu'**il comprend en outre l'étape consistant à transmettre, dans le tributaire à stocker (FTU), un certain nombre d'octets de redondance (B) égal ou proportionnel au nombre d'octets mobiles.

2. Procédé selon la revendication 1, **caractérisé en ce que** l'étape de transmission des octets de redondance (B) est effectuée avant l'étape de stockage du tributaire.

3. Procédé selon la revendication 1 ou 2, **caractérisé en ce que** l'étape de transmission des octets mobiles est effectuée pendant une insertion de pointeur.

4. Procédé selon l'une quelconque des revendications 1 à 3, **caractérisé en ce que** l'étape de transmission des octets de redondance (N) dans le tributaire à stocker (FTU) est effectuée à une vitesse qui est supérieure à la vitesse de stockage d'octets d'information (CI) du tributaire à stocker.

5. Procédé selon la revendication 4, **caractérisé en ce que** l'étape de transmission des octets de redondance (B) est effectuée pendant que les octets d'information (CI) sont stockés dans une mémoire tampon (35).

6. Procédé selon l'une quelconque des revendications 1 à 5, **caractérisé en ce que** l'étape de transmission des octets de redondance (B) est contrôlée selon la structure du tributaire à stocker (FTU).

7. Procédé selon l'une quelconque des revendications 1 à 6, **caractérisé en ce que** la position des octets de redondance et la position des octets mobiles sont sensiblement chevauchées dans le temps.

8. Procédé selon l'une quelconque des revendications 5 à 7, **caractérisé en ce que** les octets de redondance (B) contiennent un canal supplémentaire pour acheminer des informations par le biais de la mémoire tampon (22).

9. Procédé selon l'une quelconque des revendications 1 à 8, **caractérisé en ce que** les octets de redondance (B) contiennent des informations liées à des signaux d'alarme.

10. Circuit de mappage d'un tributaire dans une trame répartie dans le temps dans un réseau de télécommunications, le circuit comprenant :
- un moyen de mémoire (32) destiné à stocker le tributaire (FTU) ;
- des moyens (35, 37, 41) destinés à contrôler l'écriture du tributaire dans le moyen de mémoire (32) ;
- des moyens (38, 36, 42) destinés à contrôler la lecture à partir du moyen de mémoire (32) ; et
- des moyens (33) destinés à insérer des octets mobiles dans un tributaire (FTU') qui est lu à partir du moyen de mémoire (32),
**caractérisé en ce qu'**il comprend en outre un moyen d'écriture d'octets (39) adapté pour transmettre, dans le tributaire (FTU) à stocker, un certain nombre d'octets de redondance (B) égal ou proportionnel au nombre d'octets mobiles.

11. Circuit selon la revendication 10, **caractérisé en ce que** le moyen d'écriture d'octets (39) est adapté afin d'écrire les octets de redondance (B) à une vitesse d'écriture qui est supérieure à la vitesse d'écriture dans le moyen de mémoire (32) du tributaire (FTU).

12. circuit selon la revendication 10 ou 11, **caractérisé en ce que** le moyen de contrôle de l'écriture comprend :
- un répartiteur de durée d'écriture (37) ;
- un moyen de mémoire temporaire (35) ;
- un moyen de mélange (40) ;
et **en ce que** le répartiteur de durée d'écriture (37) contrôle le moyen d'écriture d'octets (39) afin d'écrire les octets redondants (B) dans le moyen de mélange (40).

13. Circuit selon la revendication 12, **caractérisé en ce que** les octets redondants (B) sont écrits dans le moyen de mélange (40), tandis que les octets d'information du tributaire sont stockés dans le moyen de mémoire temporaire (35).

14. Programme informatique comprenant un moyen de code de programme informatique adapté pour effectuer toutes les étapes selon l'une quelconque des revendications 1 à 9 lorsque ledit programme est exécuté sur un ordinateur.

15. Support lisible par ordinateur ayant un programme enregistré dessus, ledit support lisible par ordinateur comprenant un moyen de code de programme informatique adapté pour effectuer toutes les étapes selon l'une quelconque des revendications 1 à 9 lorsque ledit programme est exécuté sur un ordinateur.
